# EUROPEAN PATENT APPLICATION

(11) **EP 4 838 679 A1**
(43) Date of publication of application: **11.11.2026**
(21) Application number: 24921440.4
(22) Date of filing: 13.09.2024
(51) Int. Cl.: H01M 50/528, H01M 50/536, H01M 50/531, H01M 10/04

(54) **BATTERY CELL, BATTERY AND ELECTRIC DEVICE**

(30) Priority: 01.02.2024 CN 202410146547
(71) Applicant: Contemporary Amperex Technology Co., Limited, Ningde, Fujian 352100 (CN)
(72) Inventor: ZENG, Baiyan, Ningde, Fujian 352100 (CN); TANG, Daichun, Ningde, Fujian 352100 (CN); LIN, Haiming, Ningde, Fujian 352100 (CN); TIAN, Yaxi, Ningde, Fujian 352100 (CN); ZHENG, Songhai, Ningde, Fujian 352100 (CN)
(74) Representative: Lorenz Seidler Gossel Part. mbB
(86) International application number: PCT/CN2024/118898
(87) International publication number: WO 2025/161415

(57) **Abstract**

A battery cell (100), a battery (1100) and an electric device. The battery cell (100) comprises a casing (10), electrode assemblies (20) and adapters (30), wherein the casing (10) is provided with electrode terminals (40) for outputting or inputting electric energy; the electrode assemblies (20) are located in the casing (10), and each comprise a main body portion (21) and tabs (22) connected to an end portion of the main body portion (21); the adapters (30) are located in the casing (10), are provided with tab welding areas (31) configured to be welded to the tabs (22), and are further provided with terminal welding areas (32) configured to be welded to the electrode terminals (40); the tab welding areas (31) each comprise at least two tab welding sub-areas (311); and each terminal welding area (32) is located between two tab welding sub-areas (311).

## Description

The present application claims priority to Chinese Patent Application No. 202410146547.6 filed with the China National Intellectual Property Administration on February 01, 2024 and entitled "BATTERY CELL, BATTERY, AND ELECTRICAL APPARATUS", which is incorporated herein by reference in its entirety.

### TECHNICAL FIELD

The present application belongs to the field of battery welding technologies, and in particular to a battery cell, a battery, and an electrical apparatus.

### BACKGROUND

A battery is a device that can store and release electrical energy, and can provide power needed by an electronic device. A battery typically consists of one or a plurality of battery cells to meet different power demands. The battery cell is the smallest unit that makes up the battery. The battery cell includes a shell, and an adapter and an electrode assembly arranged within the shell. The shell is provided with electrode terminals configured to output or input electrical energy. Tabs of the electrode assembly are welded to the adapter, and the electrode terminals are welded to the adapter to realize the input and output of electrical energy.

However, a distance between a welding position of the tab of the electrode assembly and the adapter and a welding position of the electrode terminal and the adapter is large, resulting in high ohmic impedance, poor overcurrent, and increased heat generation in the battery cell, which seriously affects the performance of the battery cell.

The aforementioned statements are solely used for offering background technical information related to the present application, and do not necessarily constitute the prior art.

### SUMMARY

The purpose of embodiments of the present application is to provide a battery cell, a battery, and an electrical apparatus, for solving the problems in the related art, including but not limited to, that the distance between the welding position of the tab of the electrode assembly and the adapter and the welding position of the electrode terminal and the adapter is large, resulting in high ohmic impedance, poor overcurrent, and increased heat generation in the battery cell.

The embodiments of the present application use the following technical solutions:
In a first aspect, a battery cell is provided, the battery cell including a shell, an electrode assembly, and an adapter. The shell is provided with electrode terminals configured to output or input electrical energy. The electrode assembly is located inside the shell, and the electrode assembly includes a main body part and tabs connected to end portions of the main body part. The adapter is located inside the shell, the adapter is provided with a tab welding region configured to be welded to the tabs, and the adapter is further provided with a terminal welding region configured to be welded to the electrode terminals. The tab welding region includes at least two tab welding sub-regions, and the terminal welding region is located between the two tab welding sub-regions.

In the battery cell of the embodiments of the present application, the tabs of the electrode assembly are welded to the tab welding region of the adapter, and the electrode terminals of the shell are welded to the terminal welding region of the adapter, which can realize an electrical connection between the tab and the electrode terminal, thereby realizing electrical energy input or output of the battery cell. The tab welding region includes at least two tab welding sub-regions, and the terminal welding region is located between the two tab welding sub-regions, which can make a welding position of the tab and the adapter and a welding position of the adapter and the electrode terminal closer, thereby reducing ohmic resistance, overcurrent distance, and heat generation, and improving the performance of the battery cell.

In some embodiments, the terminal welding region is spaced apart from the adjacent tab welding sub-region.

By adopting the technical solution of this embodiment, a gap between the terminal welding region and the tab welding sub-region can reduce the impact of welding the electrode terminal to the adapter on the tabs and the tab welding sub-regions, which is conducive to improving the welding quality, improving the connection reliability of the adapter, the tabs, and the electrode terminals, and improving the performance and service reliability of the battery cell.

In some embodiments, a distance between the terminal welding region and the adjacent tab welding sub-region is H, where 0 mm ≤ H ≤ 10 mm.

By adopting the technical solution of this embodiment, the design of 0 mm ≤ H ≤ 10 mm makes the distance between the terminal welding region and the adjacent tab welding sub-region appropriate, which is conducive to reducing ohmic impedance, overcurrent distance, and heat generation, and improving the performance of the battery cell.

In some embodiments, 5 mm ≤ H ≤ 8 mm.

By adopting the technical solution of this embodiment, the design of 5 mm ≤ H ≤ 8 mm makes the distance between the terminal welding region and the adjacent tab welding sub-region more reasonable. This is conducive to reducing the impact of welding the electrode terminal to the adapter on the tabs and the tab welding sub-regions, improving the welding quality, and improving the connection reliability of the adapter, the tabs, and the electrode terminals. This is further conducive to reducing ohmic impedance, overcurrent distance, and heat generation, and improving the performance of the battery cell.

In some embodiments, the plurality of tab welding sub-regions are arranged at intervals in a first direction.

By adopting the technical solution of this embodiment, the plurality of tab welding sub-regions are arranged at intervals, so that there is a gap between two adjacent tab welding sub-regions. The setting of this gap can provide accommodating space for the terminal welding region, reduce the risk of overlap between the tab welding sub-regions and the terminal welding region, reduce the impact of welding the electrode terminal to the adapter on the tabs and the tab welding sub-regions, improve the welding quality, and improve the connection reliability of the adapter, the tabs, and the electrode terminals. In addition, the simple arrangement of the tab welding sub-regions is conducive to improving the welding efficiency.

In some embodiments, the plurality of tab welding sub-regions are annularly arranged in a circumferential direction of the terminal welding region.

By adopting the technical solution of this embodiment, the plurality of tab welding sub-regions are annularly arranged in the circumferential direction of the terminal welding region, so that the terminal welding region is located inside the tab welding region. The distance between the terminal welding region and the tab welding sub-region is short, the overcurrent distance is short, the ohmic impedance is small, and the heat generation is small, which is more conducive to improving the performance of the battery cell. In addition, a welding area between the tab and the adapter is large, and the welding reliability between the tab and the adapter is good, which is conducive to improving the service reliability and performance of the battery cell.

In some embodiments, two adjacent tab welding sub-regions are arranged at an interval; or, two adjacent tab welding sub-regions are connected to each other.

By adopting the technical solution of this embodiment, the plurality of tab welding sub-regions can be flexibly arranged so as to meet performance requirements of different battery cells.

In some embodiments, the adapter is welded to a plurality of tabs of the same polarity, and the plurality of tabs of the same polarity are configured to be welded to the plurality of tab welding sub-regions in a one-to-one correspondence; or, the adapter is welded to a plurality of tabs of the same polarity, there are a plurality of tab welding regions, and the plurality of tabs of the same polarity are configured to be welded to the plurality of tab welding regions in a one-to-one correspondence.

By adopting the technical solution of this embodiment, the connecting methods between the adapter, the tabs, and the electrode terminals can be flexibly set so as to meet requirements of different battery cells.

In some embodiments, when the plurality of tabs of the same polarity are welded to the plurality of tab welding sub-regions in a one-to-one correspondence, at least one of the tabs covers at least part of the corresponding tab welding sub-region; and when the plurality of tabs of the same polarity are welded to the plurality of tab welding regions in a one-to-one correspondence, at least one of the tabs covers at least part of the corresponding tab welding region.

By adopting the technical solution of this embodiment, the welding area between the tab and the adapter can be flexibly set so as to meet use requirements of different battery cells.

In some embodiments, the adapter is welded to a plurality of tabs of the same polarity, the plurality of tabs of the same polarity are spaced apart, and an avoidance gap is formed between two adjacent tabs. The avoidance gap is provided opposite to the terminal welding region.

By adopting the technical solution of this embodiment, the avoidance gap is provided opposite to the terminal welding region, so that the terminal welding region is staggered from the tab, thereby reducing the damage to the tab caused by welding the electrode terminal to the adapter, which is conducive to improving the welding quality and improving the connection reliability of the adapter, the tabs, and the electrode terminals.

In some embodiments, the adapter is welded to a plurality of tabs of the same polarity, the plurality of tabs of the same polarity overlap to form an overlapping portion, and the overlapping portion is configured to be welded to the tab welding region.

By adopting the technical solution of this embodiment, the overlapping portion is formed by a plurality of tabs lapping each other. The overlapping portion has a large thickness, which is conducive to improving the welding quality and connection reliability of the tabs and the adapter.

In some embodiments, an edge portion of the tab away from the main body part is configured to be welded to the tab welding sub-region.

By adopting the technical solution of this embodiment, the edge portion of the tab away from the main body part is welded to the tab welding sub-region, so that the edge portion of the tab away from the main body part is fixed, thereby reducing the risk of the edge portion of the tab lifting and being damaged, and also being conducive to improving the reliability of the welding connection.

In some embodiments, an avoidance through-hole is provided at a position of the tab corresponding to the terminal welding region to avoid the terminal welding region.

By adopting the technical solution of this embodiment, the avoidance through-hole is provided so that the tab avoids the terminal welding region, thereby reducing the damage to the tab caused by welding the electrode terminal to the adapter, which is conducive to improving the welding quality and improving the connection reliability of the adapter, the tabs, and the electrode terminals.

In some embodiments, an area of the tab is S1, and a cross-sectional area of the avoidance through-hole is S2, where 0.05 ≤ S2/S1 ≤ 0.25.

By adopting the technical solution of this embodiment, the design of 0.05 ≤ S2/S1 ≤ 0.25 can simultaneously ensure the welding reliability of the tab and the adapter, and reduce the damage of the tab in the welding process of the electrode terminal and the adapter, so that the tab, the adapter, and the electrode terminal can be stably connected together.

In some embodiments, 0.1 ≤ S2/S1 ≤ 0.2.

By adopting the technical solution of this embodiment, the design of 0.05S1≤S2≤0.2S1 can simultaneously better ensure the welding reliability of the tab and the adapter, and reduce the damage of the tab in the welding process of the electrode terminal and the adapter, so that the tab, the adapter, and the electrode terminal can be more stably connected together.

In some embodiments, the cross-sectional area of the avoidance through-hole is S2, where 25 mm2 ≤ S2 ≤ 125 mm2.

By adopting the technical solution of this embodiment, the design of 25 mm2 ≤ S2 ≤ 125 mm2 can simultaneously ensure the welding reliability of the tab and the adapter, and reduce the damage to the tab in the welding process of the electrode terminal and the adapter, so that the tab, the adapter, and the electrode terminal can be stably connected together.

In some embodiments, 35 mm2 ≤ S2 ≤ 65 mm2.

By adopting the technical solution of this embodiment, the design of 35 mm2 ≤ S2 ≤ 65 mm2 can simultaneously better ensure the welding reliability of the tab and the adapter, and reduce the damage of the tab in the welding process of the electrode terminal and the adapter, so that the tab, the adapter, and the electrode terminal can be more stably connected together.

In some embodiments, a distance between the avoidance through-hole and the main body part is L, and a distance between an edge of the tab away from the main body part and the main body part is h, where 5 mm ≤ L < h.

By adopting the technical solution of this embodiment, the design of 5 mm ≤ L < h allows the avoidance through-hole to be a certain distance from the main body part, so as to facilitate the bending of the tab and the opposing arrangement of the avoidance through-hole and the terminal welding region, thereby reducing the damage to the tab.

In some embodiments, 8 mm ≤ L ≤ 15 mm.

By adopting the technical solution of this embodiment, the design of 8 mm ≤ L < 15 mm can better balance the welding of the tab and the adapter, as well as the welding of the electrode terminal and the adapter, which is conducive to improving the connection reliability between the tab, the adapter, and the electrode terminal.

In some embodiments, the tab welding region is ultrasonically welded to the tab; and/or, the terminal welding region is laser-welded to the electrode terminal.

By adopting the technical solution of this embodiment, the connection reliability between the tab and the electrode terminal can be improved, thereby enhancing the performance and service reliability of the battery cell.

In a second aspect, a battery is provided, including the battery cell described in the above embodiments.

In a third aspect, an electrical apparatus is provided, including the battery described in the above embodiment.

The above illustrations are merely brief descriptions for the technical solutions of the present application. Specific implementation manners of the present application are described specifically in the following to understand the technical solutions of the present application more clearly and implement the present application according to content of the specification, and to make the above and other objectives, features and advantages of the present application more comprehensible.

### BRIEF DESCRIPTION OF THE DRAWINGS

To describe the technical solutions in the embodiments of the present application more clearly, the following briefly introduces the accompanying drawings required for describing the embodiments or the prior art. Apparently, the accompanying drawings described in the following are merely some embodiments in the present application, and a person of ordinary skill in the art may still derive other drawings from these accompanying drawings without creative efforts.
FIG. 1 is a schematic structural diagram of a vehicle according to some embodiments of the present application.
FIG. 2 is an exploded schematic structural diagram of a battery according to some embodiments of the present application.
FIG. 3 is a schematic structural diagram of a battery cell according to some embodiments of the present application.
FIG. 4 is an exploded schematic structural diagram of the battery cell shown in FIG. 3.
FIG. 5 is a schematic structural diagram of an end cover, an adapter, and an electrode assembly of a battery cell according to some other embodiments of the present application.
FIG. 6 is a schematic diagram of welding a tab of the electrode assembly to the adapter shown in FIG. 5.
FIG. 7 is a schematic diagram of welding a tab of an electrode assembly to an adapter according to yet other embodiments of the present application.
FIG. 8 is a schematic diagram of welding a tab of an electrode assembly to an adapter according to yet other embodiments of the present application.
FIG. 9 is a schematic diagram of welding a tab of an electrode assembly to an adapter according to yet other embodiments of the present application.
FIG. 10 is a schematic structural diagram of an electrode assembly according to some embodiments of the present application before tabs thereof are bent.

### Reference numerals:

1000.Vehicle; 1100. Battery; 1200. Controller; 1300. Motor; 100. Battery Cell; 10. Shell; 11. End cover; 12. Case; 20. Electrode assembly; 21. Main body part; 22. Tab; 221. Avoidance gap; 222. Overlapping portion; 223. Avoidance through-hole; 30. Adapter; 31. Tab welding region; 311. Tab welding sub-region; 32. Terminal welding region; 40. Electrode terminal; 50. Pressure relief mechanism; 200. Box body; 210. First part; 220. Second part.

### DETAILED DESCRIPTION

In order to make the technical problems, technical solutions, and beneficial effects to be solved by the present application clearer, the following is a further detailed explanation of the present application in conjunction with the accompanying drawings and embodiments. It should be understood that the specific embodiments described herein are merely used to explain the present application but are not intended to limit the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", and the like, are used only to distinguish between different objects and are not to be understood as indicating or implying relative importance or implicitly specifying the number, particular order, or primary and secondary relationship of the technical features indicated. From this, features defined as "first" and "second" may explicitly or implicitly include one or more features.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described herein can be combined with other embodiments in any suitable manners.

In the description of the embodiments of the present application, the term "and/or" is merely an association that describes the associated object, indicating that there can be three kinds of relationships, such as A and/or B can indicate the following three situations: A exists alone, A and B exist at the same time, and B exists alone. Moreover, the character "/" herein generally indicates that the context objects are in an "or" relationship.

In the description of the embodiments of the present application, the term "a plurality of" refers to more than two (including two). Similarly, "a plurality of groups" refers to more than two groups (including two groups), and "a plurality of sheets" refers to more than two sheets (including two sheets). The meaning of "several" is one or more, unless otherwise explicitly and specifically defined.

In the description of the embodiments of the present application, orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the accompanying drawing, and are only for the convenience of describing the embodiments of the present application and simplifying the description, and do not indicate or imply that the apparatus or element referred to must have a specific orientation, be constructed and operated in a specific orientation, and therefore cannot be construed as a restriction on the embodiments of the present application.

In the description of the embodiments of the present application, unless otherwise expressly specified and limited, the technical terms "mount", "couple", "connect", "fix", etc., should be understood in a broad sense, such as, a fixed connection, a detachable connection, or an integral connection; or a mechanical connection, or an electrical connection; or a direct connection, an indirect connection through an intermediate medium, or an internal communication of two elements, or interaction between two elements. For those of ordinary skill in the art, the specific meaning of the above terms in the present application may be understood on a case-by-case basis.

In the description of the embodiments of the present application, unless otherwise expressly specified and limited, when an element is referred to as being "fixed to" or "arranged on" another element, the element can be directly or indirectly on the other element. When an element is referred to as being "connected to" another element, the element may be directly connected to the other element or indirectly connected to the other element.

The battery mentioned in the embodiments of the present application refers to a physical module that includes one or a plurality of battery cells to supply higher voltage and capacity. The battery generally includes a box body configured to encapsulate one or a plurality of battery cells. The box body can, to a certain extent, prevent liquid or other foreign objects from affecting the charging or discharging of the battery cells.

In the battery, when there are a plurality of battery cells, the plurality of battery cells may be connected in series, in parallel, or in parallel-series, where parallel-series connection refers to that the plurality of battery cells are connected both in series and in parallel. The plurality of battery cells may be directly connected in series, in parallel, or in parallel-series, and then the entirety formed by the plurality of battery cells is accommodated in the box body. Of course, the battery may also be an entirety formed by connecting the plurality of battery cells in series, in parallel, or in parallel-series to form battery modules and then connecting the plurality of battery modules in series, in parallel, or in parallel-series, and is then accommodated in the box body. The battery may further include other structures. For example, the battery may further include a busbar component configured to implement electrical connections between the plurality of battery cells.

The battery cell generally includes a shell, and an electrode assembly and an adapter arranged within the shell. The shell is provided with electrode terminals configured to output or input electrical energy. Tabs of the electrode assembly are welded to the adapter, and the adapter is welded to the electrode terminals, so as to realize electrical connections between the electrical terminals and the electrode assembly, for conveniently inputting and outputting electrical energy to/from the battery cell.

In some cases, the adapter includes a terminal welding portion and a plurality of tab welding portions. The plurality of tab welding portions are spaced apart and connected to a same side of the terminal welding portion. The tab welding portions are welded to the tabs, and the terminal welding portion is welded to the electrode terminals. However, a distance between a welding position of the tab welding portion and the tab and a welding position of the terminal welding portion and the electrode terminal is large, which leads to high ohmic resistance, poor overcurrent, and increased heat generation of the battery cell, which seriously affects the performance of the battery cell.

On this basis, the embodiments of the present application provide a battery cell. A terminal welding region of an adapter is welded to electrode terminals, a tab welding region of the adapter is welded to tabs, thereby realizing electrical energy input or output of the battery cell. The tab welding region includes at least two tab welding sub-regions, and the terminal welding region is located between the two tab welding sub-regions, which can make the welding position of the tab and the adapter and the welding position of the adapter and the electrode terminal closer, thereby reducing ohmic resistance, overcurrent distance, and heat generation, and improving the performance of the battery cell.

The technical solution described in the embodiments of the present application is applicable to a battery and an electrical apparatus using the battery.

Batteries are widely applied to various electronic devices, including a mobile phone, a laptop, a battery car, an electric vehicle, an electric airplane, an electric boat, an electric toy car, an electric toy boat, an electric toy plane, an electric tool, and the like. A battery is a device that can store and release electrical energy, and can provide power needed by these electronic devices. The battery may also be an energy storage apparatus. The energy storage apparatus includes an energy storage container, an energy storage cabinet, or the like.

The electrical apparatus may be a vehicle, a mobile phone, a portable device, a laptop, a ship, a spacecraft, an electric toy, an electric tool, and the like. The spacecraft includes an airplane, a rocket, a space shuttle, a spaceship, and the like. The electric toy includes fixed or mobile electric toys, such as a game machine, an electric vehicle toy, an electric ship toy, an electric airplane toy, and the like. The electric tool includes an electric metal cutting tool, an electric grinding tool, an electric assembling tool, an electric tool for railways, for example, an electric drill, an electric grinding machine, an electric wrench, an electric screwdriver, an electric hammer, an electric impact drill, a concrete vibrator, and an electric planer. These embodiments of the present application do not make special restrictions on the above electrical apparatuses.

For the convenience of description in the following embodiments, an electrical apparatus being a vehicle according to some embodiments of the present application is taken as an example for the description.

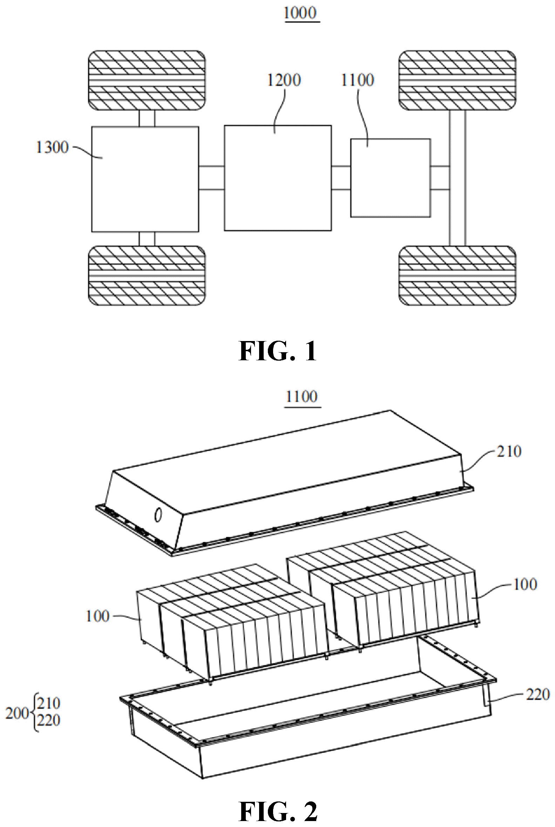

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended-range electric vehicle, or the like. A battery 1100 is arranged in the vehicle 1000. The battery 1100 may be arranged at the bottom, head, or tail of the vehicle 1000. The battery 1100 may be configured to supply power to the vehicle 1000. For example, the battery apparatus 1100 may be used as an operating power source of the vehicle 1000. The vehicle 1000 may further include a controller 1200 and a motor 1300. The controller 1200 is configured to control the battery 1100 to supply power to the motor 1300, for example, for the operating power demand when the vehicle 1000 is starting, navigating, and driving.

In some embodiments of the present application, the battery 1100 may be used not only as an operating power source of the vehicle 1000, but also as a driving power source of the vehicle 1000, replacing or partially replacing fuel or natural gas to provide driving power for the vehicle 1000.

Referring to FIG. 2, FIG. 2 is a schematic structural diagram of a battery 1100 according to some embodiments of the present application. The battery 1100 include a box body 200 and battery cells 100. The battery cells 100 are accommodated in the box body 200. The box body 200 is configured to provide an accommodating space for the battery cells 100, and the box body 200 may be of various structures. In some embodiments, the box body 200 may include a first part 210 and a second part 220. The first part 210 and the second part 220 cover each other, and the first part 210 and the second part 220 together define an accommodating space for accommodating the battery cells 100. The second part 220 may be a hollow structure with one opening end, the first part 210 may be a platy structure, and the first part 210 covers on an opening side of the second part 220, such that the first part 210 and the second part 220 jointly define the accommodating space; or, the first part 210 and the second part 220 may each be a hollow structure with one opening side, and an opening side of the first part 210 covers on an opening side of the second part 220. Certainly, the box body 200 formed by the first part 210 and the second part 220 may be in various shapes, such as a cylinder or a cuboid.

In the battery 1100, there may be a plurality of battery cells 100, and the plurality of battery cells 100 may be connected in series, in parallel, or in parallel-series, and the parallel-series connection means that the plurality of battery cells 100 are connected in both series and parallel.

In some embodiments, the plurality of battery cells 100 may be directly connected in series, in parallel, or in parallel-series, and then the entirety formed by the plurality of battery cells 100 is accommodated in the box body 200. Of course, the battery 1100 may also be an entirety formed by connecting the plurality of battery cells 100 in series, in parallel, or in parallel-series to form battery 1100 modules and then connecting the plurality of battery 1100 modules in series, in parallel, or in parallel-series, and is then accommodated in the box body 200. The battery 1100 may further include other structures. For example, the battery 1100 may further include a bus component for electrically connecting the plurality of battery cells 100.

In some embodiments, the battery 1100 may not include the box body 200, but the plurality of battery cell 100 are electrically connected and are formed into an entirety through necessary fixing structures, and the entirety is then assembled into the electrical apparatus.

In the present application, the battery cell 100 may include a lithium-ion secondary battery, a lithium-ion primary battery, a lithium-sulfur battery, a sodium-lithium-ion battery, a sodium-ion battery, a lithium metal battery, a magnesium-ion battery, or the like, which is not limited in embodiments of the present application. The battery cell 100 may be in a cylindrical shape, a flat shape, a cuboid shape, or another shape, which is also not limited in the embodiments of the present application. The battery cells 100 are generally classified into three types depending on the way of encapsulation: cylindrical battery cells, prismatic battery cells, and pouch cells, which is not limited in the embodiments of the present application.

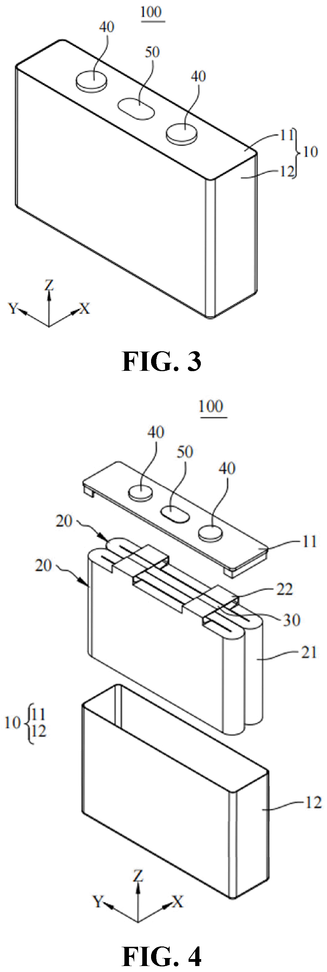

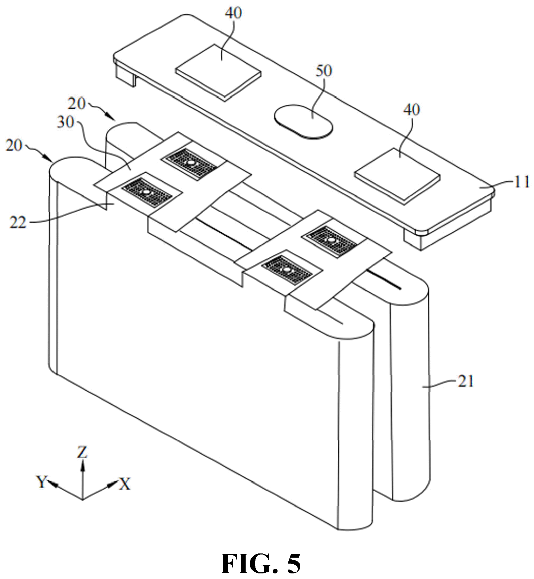

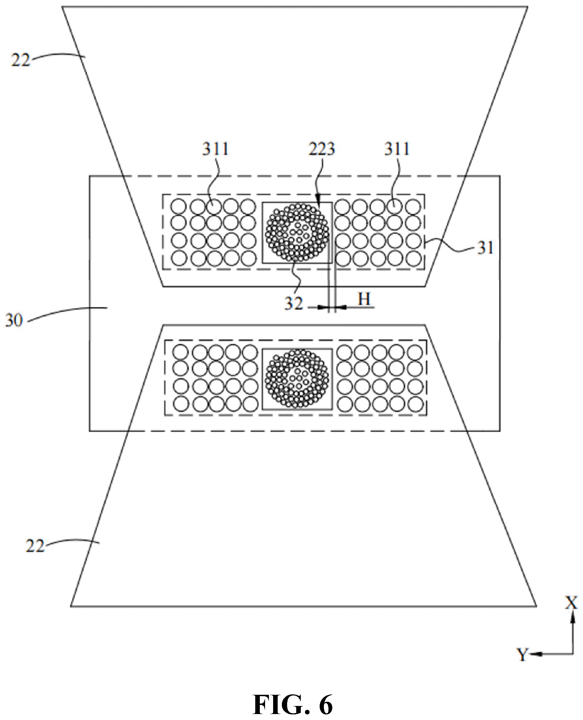

Referring to FIG. 3 to FIG. 6, FIG. 3 is a schematic structural diagram of a battery cell 100 according to some embodiments of the present application. FIG. 4 is an exploded schematic structural diagram of the battery cell 100 shown in FIG. 3. FIG. 5 is a schematic structural diagram of an end cover 11, an adapter 30, and an electrode assembly 20 of a battery cell 100 according to some other embodiments of the present application. FIG. 6 is a schematic diagram of welding a tab 22 of the electrode assembly 20 to the adapter 30 shown in FIG. 5.

Referring to FIG. 3 and FIG. 4, the battery cell 100 includes a shell 10 and an electrode assembly 20. The shell 10 refers to a case 12 structure with a space inside so as to accommodate and protect the electrode assembly 20. The shell 10 may be made of a material with certain hardness and strength, so that the shell 10 is not easy to deform when being extruded and collided, thereby improving the structural strength of the battery cell 100 as well as improving the reliability.

For example, the shell 10 may include an end cover 11 and a case 12. The end cover 11 refers to a component that covers an opening of the case 12 to isolate the internal environment of the battery cell 100 from the external environment. Without limitation, the shape of the end cover 11 may be adapted to the shape of the case 12 to fit the case 12. Optionally, the end cover 11 may be made of a material (such as aluminum alloy) with a certain hardness and strength, and in this way, the end cover 11 is not easily deformed when being subjected to extrusion and collisions, such that the battery cell 100 is capable of having a higher structural strength, and the safety performance can also be improved.

The case 12 is an assembly configured to fit the end cover 11 to form the internal environment of the battery cell 100, where the formed internal environment can be used for accommodating the electrode assembly 20, an electrolyte solution, and an adapter 30. The case 12 and the end cover 11 may be separate components, the case 12 may be provided with an opening, and the internal environment of the battery cell 100 is formed by making the end cover 11 cover the opening at the opening. Without limitation, the end cover 11 and the case 12 may also be integrated. Specifically, the end cover 11 and the case 12 may form a common connecting surface before other components enter the shell. When the interior of the case 12 is required to be encapsulated, the case 12 is covered by the end cover 11. The case 12 may be of various shapes and dimensions, such as a cuboid, a cylinder, and a hexagonal prism. Specifically, the shape of the case 12 may be determined according to the specific shape and dimension of the electrode assembly 20. The case 12 may be made of various materials, such as copper, iron, aluminum, stainless steel, aluminum alloy, and plastic, which is not particularly limited in the embodiments of the present application.

The electrode assembly 20 is a component of the battery cell 100 where an electrochemical reaction occurs. One or a plurality of electrode assemblies 20 may be included within the case 12. The electrode assembly 20 includes a positive electrode plate, a negative electrode plate, and a separator. During charging and discharging of the battery cell 100, active ions (e.g., lithium ions) are intercalated and deintercalated back and forth between the positive electrode plate and the negative electrode plate. The spacer is arranged between the positive electrode plate and the negative electrode plate, and functions to prevent a short circuit between the positive electrode and the negative electrode while enabling the active ions to pass through.

The positive electrode plate includes a positive electrode current collector and a positive electrode active substance layer; the positive electrode active substance layer is coated on a surface of the positive electrode current collector; a portion, not coated with the positive electrode active substance layer, of the positive electrode current collector protrudes out of a portion coated with the positive electrode active substance layer, the portion not coated with the positive electrode active substance layer is used as a positive tab, or a metal conductor is welded and led out of the positive electrode current collector to be used as the positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active substance layer; the negative electrode active substance layer is coated on a surface of the negative electrode current collector; a portion, not coated with the negative electrode active substance layer, of the negative electrode current collector protrudes out of a portion coated with the negative electrode active substance layer, the portion not coated with the negative electrode active substance layer is used as a negative tab, or a metal conductor is welded and led out of the negative electrode current collector to be used as the negative tab. The material of the negative electrode current collector can be copper, and the negative electrode active substance can be carbon or silicon. In order to ensure, to a certain extent, that no fusing occurs when a large current passes, there are a plurality of positive tabs which are stacked together, and there are a plurality of negative tabs which are stacked together. It is to be understood that in the electrode assembly 20, one positive tab and one negative tab may be provided. In other words, two groups of tabs are provided on the electrode assembly 20, where each group includes at least one tab 22, and one group of tabs are positive tabs, and the other group of tabs are negative tabs. A portion composed of the current collectors of the electrode assembly 20 is a main body part 21 of the electrode assembly 20.

The electrode assembly 20 may have a wound structure or a stacked structure. The wound structure is usually to weld the tabs 22 to the current collector, then arrange the positive electrode plate, the separator, the negative electrode plate, and the separator in sequence; after then, it is wound to form a cylindrical or prismatic cell. The stacked structure is usually to lead out the tabs 22 from the current collector, arrange the positive electrode plate, the negative electrode plate, and the separator in a sequence of positive electrode plate, separator, negative electrode plate, and separator, and then stack by layers to form a stacked cell, where the separator may be cut, and the separator slices are stacked directly; or the separator is not cut, but folded in a Z-shape for stacking. The separator may be made of a material such as Polypropylene (PP) or Polyethylene (PE). The separator is an insulating film arranged between the positive electrode plate and the negative electrode plate, and mainly functions to isolate the positive and negative electrodes and prevent electrons in the battery 1100 from freely passing through, thereby preventing short circuit to a certain extent, and allowing ions in the electrolyte solution to freely pass between the positive and negative electrodes, so as to form a circuit between the positive and negative electrodes. The positive electrode plate and the negative electrode plate are collectively referred to as electrode plates.

An electrode terminal 40 is provided on the shell 10 of the battery cell 100. The electrode terminal 40 refers to a conductive member arranged on the shell 10, and the electrode terminal 40 is connected to the tab 22 of the electrode assembly 20 so as to output electric energy of the battery cell 100 or charge the battery cell 100. The battery cell 100 generally has two electrode terminals 40, and the two electrode terminals 40 are respectively connected to the positive and negative tabs of the electrode assembly 20. The electrode terminal 40 connected to the positive tab is a positive electrode terminal, and the electrode terminal 40 connected to the negative tab is a negative electrode terminal.

For example, the two electrode terminals 40 may be arranged on the end cover 11, or respectively arranged on the case 12 and the end cover 11, or arranged on different side walls of the case 12.

A pressure relief mechanism 50 may be provided on the shell 10 of the battery cell 100. The pressure relief mechanism 50 is configured to relieve an internal pressure when the internal pressure or temperature of the battery cell 100 reaches a threshold, thereby improving the service reliability of the battery 1100.

For example, the pressure relief mechanism 50 may be arranged at the end cover 11 or may be arranged at the case 12.

Referring to FIG. 4 and FIG. 5, the battery cell 100 further includes an adapter 30, and the adapter 30 refers to a conductive component located inside the shell 10. The adapter 30 is welded to the tab 22 and the electrode terminal 40 to achieve the connection between the tab 22 and the electrode terminal 40. The battery cell 100 generally has two adapters 30, and the two adapters 30 are classified into a positive adapter and a negative adapter. The positive tab and the positive electrode terminal are welded to the positive adapter, and the negative tab and the negative electrode terminal are welded to the negative adapter, so as to achieve the output or input of electrical energy of the battery cell 100.

For ease of explanation, in the following, the positive tab and the negative tab are collectively referred to as the tab 22, the positive electrode terminal and the negative electrode terminal are collectively referred to as the electrode terminal 40, and the positive adapter and the negative adapter are collectively referred to as the adapter 30. That is to say, the tab 22 below may refer to either the positive tab or the negative tab. When the tab 22 refers to the positive tab, the electrode terminal 40 refers to the positive electrode terminal, and the adapter 30 refers to the positive adapter. When the tab 22 refers to the negative tab, the electrode terminal 40 refers to the negative electrode terminal, and the adapter 30 refers to the negative adapter.

Referring to FIG. 5 and FIG. 6, in some embodiments of the present application, a battery cell 100 is provided, the battery cell 100 including a shell 10, an electrode assembly 20, and an adapter 30. The shell 10 is provided with electrode terminals 40 configured to output or input electrical energy. The electrode assembly 20 is located inside the shell 10, and the electrode assembly 20 includes a main body part 21 and tabs 22 connected to end portions of the main body part 21. The adapter 30 is located inside the shell 10, the adapter 30 is provided with a tab welding region 31 configured to be welded to the tabs 22, and the adapter 30 is further provided with a terminal welding region 32 configured to be welded to the electrode terminals 40. The tab welding region 31 includes at least two tab welding sub-regions 311, and the terminal welding region 32 is located between the two tab welding sub-regions 311.

The tab welding region 31 may refer to a region of the adapter 30 used for welding with the tab 22. For example, after the tab 22 is welded to the adapter 30, a first welding structure is formed on the adapter 30. A region occupied by the first welding structure on the adapter 30 is referred to as the tab welding region 31. The first welding structure may be a weld, a weld point, a weld mark, or other structures.

The tab welding region 31 includes at least two tab welding sub-regions 311, and the tab welding sub-region 311 may refer to a part of the tab welding region 31. There may be two, three, four, or more tab welding sub-regions 311. For example, the tab welding sub-region 311 may refer to a portion of the first welding structure in the region occupied by the adapter 30.

The terminal welding region 32 may refer to a region of the adapter 30 used for welding with the electrode terminal 40. For example, after the electrode terminal 40 is welded to the adapter 30, a second welding structure is formed on the adapter 30. A region occupied by the second welding structure on the adapter 30 is referred to as the electrode terminal welding region 32. The second welding structure may be a weld, a weld point, a weld mark, or other structures.

For ease of illustration, dashed boxes are used in FIG. 6 to FIG. 9 to represent the tab welding region 31 and the tab welding sub-region 311, and circles are used to represent the first welding structure and the second welding structure.

The terminal welding region 32 is located between the two tab welding sub-regions 311. It is understandable that the tab welding sub-regions 311 are provided on both sides of the terminal welding region 32.

For example, there are two tab welding sub-regions 311, and the terminal welding region 32 is located between the two tab welding sub-regions 311.

In the battery cell 100 of the embodiments of the present application, the tabs 22 of the electrode assembly 20 are welded to the tab welding region 31 of the adapter 30, and the electrode terminals of the shell 10 are welded to the terminal welding region 32 of the adapter 30, which can realize an electrical connection between the tab 22 and the electrode terminal 40, thereby realizing electrical energy input or output of the battery cell 100. The tab welding region 31 includes at least two tab welding sub-regions 311, and the terminal welding region 32 is located between the two tab welding sub-regions 311, which can make the welding position of the tab 22 and the adapter 30 and the welding position of the adapter 30 and the electrode terminal 40 closer, thereby reducing ohmic resistance, overcurrent distance, and heat generation, and improving the performance of the battery cell 100.

In some embodiments, the adapter 30 has a plate-like structure, and the terminal welding region 32 is located between at least two tab welding sub-regions 311, so that the adapter 30 with the tab 22 welding portions spaced apart is changed to a quadrilateral adapter plate structure.

In other embodiments of the present application, the tab welding region 31 is ultrasonically welded to the tab 22; and/or, the terminal welding region 32 is laser-welded to the electrode terminal 40.

The ultrasonic welding is a welding method that uses high-frequency vibration energy; it belongs to the field of power ultrasound. In the ultrasonic welding process, alternating current is first converted into a high-frequency signal, and then high-frequency mechanical vibration is transmitted to the workpiece through a transducer. Under vibration, frictional heat is generated in a contact region of the workpiece, causing a plastic or metal material to melt. The ultrasonic welding may be applied to welding thermoplastic products as well as metal welding.

The laser welding is a welding method that uses thermal energy of a laser beam. During laser welding, a laser beam is focused onto a weld joint. The high-energy-density laser beam rapidly heats a local region of the weld joint to a temperature required for melting or fusion. The welding material melts rapidly under irradiation of the laser beam, forming a welding seam. The laser welding may be applied to the welding of metal, plastic, and other materials.

In one possible implementation, the tab welding region 31 and the tab 22 are ultrasonically welded. It is understood that the tab 22 is usually thin. The tab welding region 31 and the tab 22 are welded by ultrasonic welding, the ultrasonic welding causes little damage to the tab 22, and the welding quality between the tab 22 and the adapter 30 is good, resulting in good connection reliability.

In another possible implementation, the terminal welding region 32 is laser-welded to the electrode terminal 40. It is understandable that the terminal welding region 32 and the electrode terminal 40 are welded by laser welding, which results in high welding quality and good connection reliability between the terminal welding region 32 and the electrode terminal 40.

In another possible implementation, the tab welding region 31 is ultrasonically welded to the tab 22; and/or the terminal welding region 32 is laser-welded to the electrode terminal 40. This design enables the adapter 30 to be stably and reliably connected to the tab 22 and the electrode terminal 40, which is conducive to improving the performance and service reliability of the battery cell 100.

By adopting the technical solution of this embodiment, the connection reliability between the tab 22 and the electrode terminal 40 can be improved, thereby enhancing the performance and service reliability of the battery cell 100.

In some other embodiments of the present application, referring to FIG. 5 and FIG. 6, the terminal welding region 32 is spaced apart from the adjacent tab welding sub-region 311.

It is understandable that there is a gap between the terminal welding region 32 and the adjacent tab welding sub-region 311, that is, the terminal welding region 32 and the adjacent tab welding sub-region 311 do not overlap.

By adopting the technical solution of this embodiment, a gap between the terminal welding region 32 and the tab welding sub-region 311 can reduce the impact of welding the electrode terminal 40 and the adapter 30 on the tab 22 and the tab welding sub-region 311, which is conducive to improving the welding quality, improving the connection reliability of the adapter 30, the tabs 22, and the electrode terminals 40, and improving the performance and service reliability of the battery cell 100.

In some embodiments, the terminal welding region 32 may also partially overlap with the tab welding sub-region 311.

In other embodiments of the present application, referring to FIG. 5 and FIG. 6, a distance between the terminal welding region 32 and the adjacent tab welding sub-region 311 is H, where 0 mm ≤ H ≤ 10 mm.

The distance between the opposite edges of the terminal welding region 32 and the adjacent tab welding sub-region 311 is H.

0 mm ≤ H ≤ 10 mm, and it is understandable that, H = 0 mm means that the terminal welding region 32 and the adjacent tab welding sub-region 311 are connected to each other at their edge portions; and 0 mm < H ≤ 10 mm means that there is a gap between the terminal welding region 32 and the adjacent tab welding sub-region 311, and a width of the gap is less than or equal to 10 mm, so that the distance between the terminal welding region 32 and the tab welding sub-region 311 is not too large, which is conducive to reducing ohmic impedance, overcurrent distance, and heat generation, and improving the performance of the battery cell 100.

By adopting the technical solution of this embodiment, the design of 0 mm ≤ H ≤ 10 mm makes the distance between the terminal welding region 32 and the adjacent tab welding sub-region 311 appropriate, which is conducive to reducing ohmic impedance, overcurrent distance, and heat generation, and improving the performance of the battery cell 100.

In other embodiments of the present application, referring to FIG. 5 and FIG. 6, 5 mm ≤ H ≤ 8 mm.

5 mm ≤ H ≤ 8 mm, it is understandable that H ≥ 5 mm, there is a certain distance between the terminal welding region 32 and the adjacent tab welding sub-region 311, which can reduce the impact of welding the electrode terminal 40 and the adapter 30 on the tab 22 and the tab welding sub-region 311, which is conducive to improving the welding quality, improving the connection reliability of the adapter 30, the tabs 22, and the electrode terminals 40, and improving the performance and service reliability of the battery cell 100; H ≤ 8 mm, so that the distance between the terminal welding region 32 and the adjacent tab welding sub-region 311 is small, which is more conducive to reducing ohmic impedance, overcurrent distance, and heat generation, and improving the performance of the battery cell 100.

By adopting the technical solution of this embodiment, the design of 5 mm ≤ H ≤ 8 mm makes the distance between the terminal welding region 32 and the adjacent tab welding sub-region 311 more reasonable. This is conducive to reducing the impact of welding the electrode terminal 40 and the adapter 30 on the tab 22 and the tab welding sub-region 311, improving the welding quality, and improving the connection reliability of the adapter 30, the tabs 22, and the electrode terminal 40. This is further conducive to reducing ohmic impedance, overcurrent distance, and heat generation, and improving the performance of the battery cell 100.

In some embodiments, a value of H may be 0 mm, 10 mm, and any number between 0 mm and 10 mm. For example, the value of H may be, but is not limited to, 0 mm, 1 mm, 2 mm, 3 mm, 4 mm, 5 mm, 6 mm, 7 mm, 8 mm, 9 mm, 10 mm.

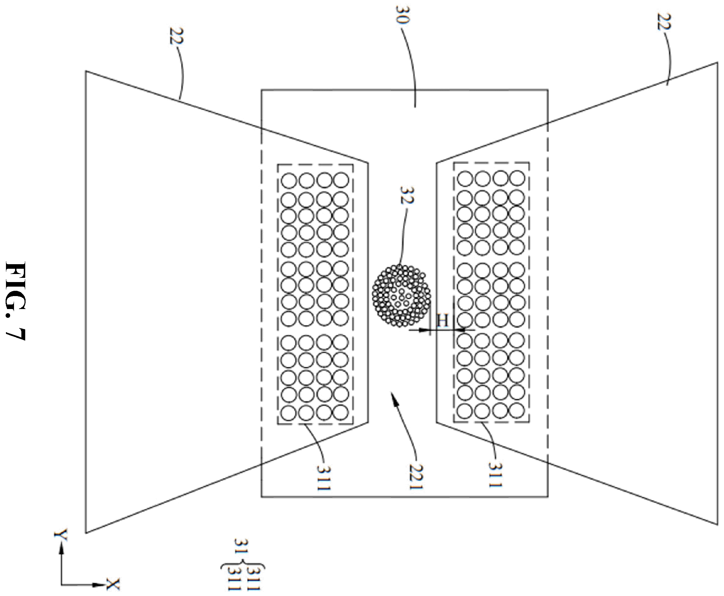

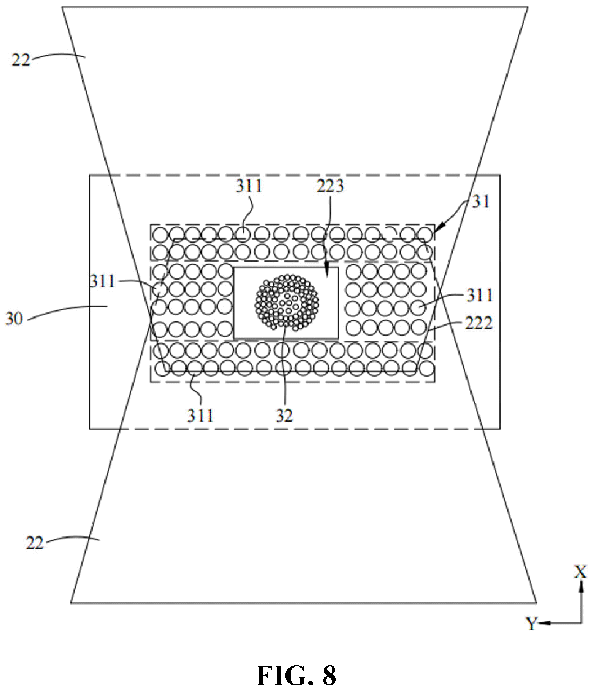

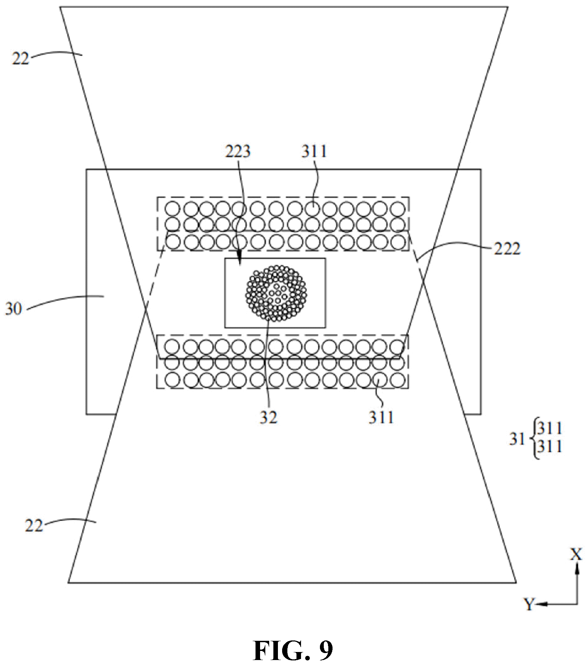

Referring to FIG. 7 to FIG. 9 together, FIG. 7 is a schematic diagram of welding a tab 22 of an electrode assembly 20 to an adapter 30 according to yet other embodiments of the present application. FIG. 8 is a schematic diagram of welding a tab 22 of an electrode assembly 20 to an adapter 30 according to yet other embodiments of the present application. FIG. 9 is a schematic diagram of welding a tab 22 of an electrode assembly 20 to an adapter 30 according to yet other embodiments of the present application.

In other embodiments of the present application, referring to FIG. 5, FIG. 6, and FIG. 7, the plurality of tab welding sub-regions 311 are arranged at intervals in a first direction.

It is understandable that the plurality of tab welding sub-regions 311 are arranged in the first direction, and there is a gap between two adjacent tab welding sub-regions 311.

For example, referring to FIG. 5 and FIG. 6, the electrode assembly 20 has a flat structure, and the electrode assembly 20 has a length direction, a width direction, and a height direction. The length direction of the electrode assembly 20 may refer to a Y direction in FIG. 5, the width direction of the electrode assembly 20 may refer to a X direction in FIG. 5, and the height direction of the electrode assembly 20 may refer to a Z direction in FIG. 5. The shape of the electrode assembly 20 is determined by the shape of the main body part 21. The length direction of the electrode assembly 20 is the length direction of the main body part 21, the width direction of the electrode assembly 20 is the width direction of the main body part 21, and the height direction of the electrode assembly 20 is the height direction of the main body part 21.

Referring to FIG. 5, a welding process between the tab 22 and the adapter 30 is as follows: the tab 22 is led out from an upper end of the main body part 21, the adapter 30 is located above the main body part 21, an upper portion of the tab 22 is bent and covers the adapter 30, or the adapter 30 covers the bent upper portion of the tab 22 before they are welded. The adapter 30 has two tabs 22 welded on. Before the tabs 22 are bent, the two tabs 22 are located on opposite sides of the adapter 30. Then, the upper portions of the two tabs 22 are bent toward each other and cover the adapter 30, or the adapter 30 covers the bent upper portions of the tabs 22, and then the upper portions of the two tabs 22 are welded on the adapter 30.

Referring to FIG. 5 and FIG. 6, the first direction is the length direction of the electrode assembly 20, that is, the plurality of tab welding sub-regions 311 are arranged at intervals in the length direction of the electrode assembly 20; or, referring to FIG. 7, the first direction is the width direction of the electrode assembly 20, and the plurality of tab welding sub-regions 311 may be arranged at intervals in the width direction of the electrode assembly 20. This arrangement can facilitate welding operations and improve welding efficiency and welding quality. Of course, in other embodiments, the plurality of tab welding sub-regions 311 may also be arranged at intervals in other directions.

By adopting the technical solution of this embodiment, the plurality of tab welding sub-regions 311 are arranged at intervals, so that there is a gap between two adjacent tab welding sub-regions 311. The setting of this gap can provide accommodating space for the terminal welding region 32, reduce the risk of overlap between the tab welding sub-regions 311 and the terminal welding region 32, reduce the impact of welding the electrode terminal 40 to the adapter 30 on the tab 22 and the tab welding sub-region 311, improve the welding quality, and improve the connection reliability of the adapter 30, the tabs 22, and the electrode terminals 40. In addition, the simple arrangement of the tab welding sub-regions 311 is conducive to improving the welding efficiency.

In other embodiments of the present application, referring to FIG. 8, the plurality of tab welding sub-regions 311 are annularly arranged in a circumferential direction of the terminal welding region 32.

It is understandable that the plurality of tab welding sub-regions 311 are arranged in the circumferential direction of the terminal welding region 32 and surround the outer periphery of the terminal welding region 32. There may be, but is not limited to, three, four, or five tab welding sub-regions 311. The plurality of tab welding sub-regions 311 may enclose a polygonal structure such as triangle, quadrilateral, and pentagon. Of course, the plurality of tab welding sub-regions 311 may also enclose a circular structure, an elliptical structure, and the like.

By adopting the technical solution of this embodiment, the plurality of tab welding sub-regions 311 are annularly arranged in the circumferential direction of the terminal welding region 32, so that the terminal welding region 32 is located inside the tab welding region 31. The distance between the terminal welding region 32 and the tab welding sub-region 311 is short, the overcurrent distance is short, the ohmic impedance is small, and the heat generation is small, which is more conducive to improving the performance of the battery cell 100. In addition, a welding area between the tab 22 and the adapter 30 is large, and the welding reliability between the tab 22 and the adapter 30 is good, which is conducive to improving the service reliability and performance of the battery cell 100.

In other embodiments of the present application, referring to FIG. 8, two adjacent tab welding sub-regions 311 are arranged at an interval; or, two adjacent tab welding sub-regions 311 are connected to each other.

It is understandable that there is a gap between end portions of two adjacent tab welding sub-regions 311 that are close to each other, that is, the plurality of tab welding sub-regions 311 are arranged to form a broken ring structure; the end portions of two adjacent tab welding sub-regions 311 that are close to each other are connected, that is, there is no gap between the end portions of two adjacent tab welding sub-regions 311 that are close to each other, that is, the plurality of tab welding sub-regions 311 are arranged to form a closed ring structure.

For example, referring to FIG. 8, there are four tab welding sub-regions 311. The upper and lower tab welding sub-regions 311 are located on upper and lower sides of the terminal welding region 32, and the left and right tab welding sub-regions 311 are located on left and right sides of the terminal welding region 32. The four tab welding sub-regions 311 are connected end to end in sequence to form a quadrilateral structure to surround the terminal welding region 32.

By adopting the technical solution of this embodiment, the plurality of tab welding sub-regions 311 can be flexibly arranged so as to meet performance requirements of different battery cells 100.

In other embodiments of the present application, referring to FIG. 6 and FIG. 7, the adapter 30 is welded to a plurality of tabs 22 of the same polarity, and the plurality of tabs 22 of the same polarity are configured to be welded to a plurality of tab welding sub-regions 311 in a one-to-one correspondence; or, the adapter 30 is welded to a plurality of tabs 22 of the same polarity, there are a plurality of tab welding regions 31, and the plurality of tabs 22 of the same polarity are configured to be welded to the plurality of tab welding regions 31 in a one-to-one correspondence.

The plurality of tabs 22 with the same polarity may refer to a plurality of positive tabs or a plurality of negative tabs.

The adapter 30 has a plurality of tabs 22 of the same polarity welded on it. It is understandable that when one electrode assembly 20 has a plurality of tabs 22 of the same polarity, these tabs 22 of the same polarity are all welded onto a same adapter 30; when a battery cell 100 has a plurality of electrode assemblies 20, tabs 22 of the plurality of electrode assemblies 20 of the same polarity are welded onto a same adapter 30.

For example, referring to FIG. 5 and FIG. 6, the battery cell 100 is provided with two electrode assemblies 20, and the two electrode assemblies 20 have two tabs 22 with the same polarity led out therefrom. The two tabs 22 are welded to a same adapter 30, which facilitates the improvement of welding efficiency.

In one possible implementation, referring to FIG. 7 and FIG. 9, the adapter 30 is welded to a plurality of tabs 22 of the same polarity. The plurality of tabs 22 of the same polarity are configured to be welded to a plurality of tab welding sub-regions 311 in a one-to-one correspondence. It is understandable that a region where one tab 22 is welded to the adapter 30 is referred to as a tab welding sub-region 311, and the entire region where the plurality of tabs 22 are welded to the adapter 30 is referred to as a tab welding region 31. That is, the adapter 30 has one tab welding region 31, and the one tab welding region 31 includes a plurality of tab welding sub-regions 311. The plurality of tab welding sub-regions 311 are welded to the plurality of tabs 22 of the same polarity in a one-to-one correspondence.

For example, referring to FIG. 7, the adapter 30 is welded to two tabs 22 of the same polarity. The adapter 30 is provided with one tab welding region 31, and the tab welding region 31 includes two tab welding sub-regions 311. The two tab welding sub-regions 311 are arranged vertically and welded to the two tabs 22 arranged vertically respectively. The terminal welding region 32 is located between the two tab welding sub-regions 311.

In another possible implementation, referring to FIG. 6, the adapter 30 is welded to a plurality of tabs 22 of the same polarity, and there are a plurality of tab welding regions 31. The plurality of tabs 22 of the same polarity are configured to be welded to the plurality of tab welding regions 31 in a one-to-one correspondence. It is understandable that a region where one tab 22 is welded to the adapter 30 is referred to as a tab welding region 31, and the plurality of tabs 22 are welded to the adapter 30 to form a plurality of tab welding regions 31. That is, the adapter 30 is provided with a plurality of tab welding regions 31, and the plurality of tab welding regions 31 are welded to the plurality of tabs 22 of the same polarity in a one-to-one correspondence. Each tab welding region 31 is provided with one terminal welding region 32. In other words, the electrode terminal 40 and the adapter 30 have a plurality of welding points, and the welding reliability between the electrode terminal 40 and the adapter 30 is desirable.

For example, referring to FIG. 6, the adapter 30 is welded to two tabs 22 of the same polarity. The adapter 30 is provided with two tab welding regions 31, and the two tab welding regions 31 are arranged vertically. The two tab welding regions 31 are welded to the two tabs 22 arranged vertically, respectively. Each tab welding region 31 includes two tab welding sub-regions 311 arranged horizontally. A terminal welding region 32 is provided between the two tab welding sub-regions 311 arranged horizontally. That is, the adapter 30 is welded to the electrode terminal 40 with two terminal welding regions 32 arranged vertically.

By adopting the technical solution of this embodiment, the connecting methods between the adapter 30, the tabs 22, and the electrode terminals 40 can be flexibly set so as to meet requirements of different battery cells 100.

In other embodiments of the present application, referring to FIG. 6, FIG. 7, and FIG. 9, when the plurality of tabs 22 of the same polarity are welded to the plurality of tab welding sub-regions 311 in a one-to-one correspondence, at least one of the tabs 22 covers at least part of the corresponding tab welding sub-region 311; and when the plurality of tabs 22 of the same polarity are welded to the plurality of tab welding regions 31 in a one-to-one correspondence, at least one of the tabs 22 covers at least part of the corresponding tab welding region 31.

"At least one of the tabs 22" may refer to one, two, or three tabs 22; it may refer to part of the tabs 22 or all tabs 22.

"At least part of the tab welding sub-region 311" may refer to part of the tab welding sub-region 311 or the entire tab welding sub-region 311.

"At least part of the tab welding region 31" may refer to part of the tab welding region 31 or the entire tab welding region 31.

In one possible implementation, when a plurality of tabs 22 of the same polarity are welded to a plurality of tab welding sub-regions 311 in a one-to-one correspondence, at least one of the tabs 22 covers at least part of the corresponding tab welding sub-region 311. It is understandable that at least one of the tabs 22 covers at least part of the tab welding sub-region 311 to which it is welded, that is, at least one of the tabs 22 may cover part of the tab welding sub-region 311 to which it is welded, or it may cover the entire region of the tab welding sub-region 311 to which it is welded. When the tab 22 covers the entire region of the tab welding sub-region 311 to which it is welded, a large welding area between the tab 22 and the adapter 30 results in good connection reliability between the tab 22 and the adapter 30, which is conducive to improving the service reliability and performance of the battery cell 100.

For example, referring to FIG. 7, the upper and lower tabs 22 completely cover the two tab welding sub-regions 311 arranged vertically, and the connection between the tabs 22 and the adapter 30 is reliable.

For example, referring to FIG. 9, the upper tab 22 covers a lower portion of the upper tab welding sub-region 311, and the lower tab 22 covers an upper portion of the lower tab welding sub-region 311.

In another possible implementation, when a plurality of tabs 22 of the same polarity are welded to a plurality of tab welding regions 31 in a one-to-one correspondence, at least one of the tabs 22 covers at least part of the corresponding tab welding region 31. It is understandable that at least one of the tabs 22 covers at least part of the tab welding region 31 to which it is welded, that is, at least one of the tabs 22 may cover part of the tab welding region 31 to which it is welded, or it may cover the entire region of the tab welding region 31 to which it is welded. When the tab 22 covers the entire region of the tab welding region 31 to which it is welded, a large welding area between the tab 22 and the adapter 30 results in good connection reliability between the tab 22 and the adapter 30, which is conducive to improving the service reliability and performance of the battery cell 100.

For example, referring to FIG. 6, the upper and lower tabs 22 completely cover the two tab welding regions 31 arranged vertically, and the connection between the tabs 22 and the adapter 30 is reliable.

By adopting the technical solution of this embodiment, the welding area between the tab 22 and the adapter 30 can be flexibly set so as to meet use requirements of different battery cells 100.

In other embodiments of the present application, referring to FIG. 7, the adapter 30 is welded to a plurality of tabs 22 of the same polarity, the plurality of tabs 22 of the same polarity are spaced apart, and an avoidance gap 221 is formed between two adjacent tabs 22. The avoidance gap 221 is provided opposite to the terminal welding region 32.

The avoidance gap 221 may refer to the gap between two adjacent tabs 22.

For example, referring to FIG. 7, a gap enclosed by the edges of the upper and lower tabs 22 facing each other is the avoidance gap 221.

By adopting the technical solution of this embodiment, the avoidance gap 221 is provided opposite to the terminal welding region 32, so that the terminal welding region 32 is staggered from the tab 22, thereby reducing the damage to the tab 22 caused by welding the electrode terminal 40 to the adapter 30, which is conducive to improving the welding quality and improving the connection reliability of the adapter 30, the tabs 22, and the electrode terminals 40.

In particular, when the electrode terminal 40 and the adapter 30 are laser-welded, direct laser irradiation on the tab 22 will cause damage to the tab 22; while the avoidance gap 221 allows the laser to pass through, thereby irradiating the tab 22 and reducing the risk of damage to the tab 22.

In other embodiments of the present application, referring to FIG. 8, the adapter 30 is welded to a plurality of tabs 22 of the same polarity, the plurality of tabs 22 of the same polarity overlap to form an overlapping portion 222, and the overlapping portion 222 is configured to be welded to the tab welding region 31.

It is understandable that after the plurality of tabs 22 are bent, overlapping portions of the plurality of tabs 22 form the overlapping portion 222.

For example, referring to FIG. 8, portions of the two tabs 22 arranged vertically are stacked to form the overlapping portion 222.The overlapping portion 222 is welded to the adapter 30 to form a quadrilateral tab welding region 31. The terminal welding region 32 is located inside the tab welding region 31.

By adopting the technical solution of this embodiment, the overlapping portion 222 is formed by a plurality of tabs 22 lapping each other. The overlapping portion 222 has a large thickness, which is conducive to improving the welding quality and connection reliability of the tabs 22 and the adapter 30.

In other embodiments of the present application, referring to FIG. 9, an edge portion of the tab 22 away from the main body part 21 is configured to be welded to the tab welding sub-region 311.

Before the tab 22 is bent, the tab 22 has two edge portions arranged opposite each other, one of the edge portions is connected to the main body part 21, and the other edge portion is the edge portion of the main body part 21 away from the main body part 21.

For example, referring to FIG. 9, the tab welding sub-regions 311 include two tab welding sub-regions 311 arranged vertically. An upper portion of the lower tab 22 is welded to the upper tab welding sub-regions 311, and a lower portion of the upper tab 22 is welded to the lower tab welding sub-regions 311. The upper and lower tabs 22 overlap to form the overlapping portion 222, that is, an upper portion of the overlapping portion 222 is welded to the upper tab welding sub-regions 311, and a lower portion of the overlapping portion 222 is welded to the lower tab welding sub-regions 311.

By adopting the technical solution of this embodiment, the edge portion of the tab 22 away from the main body part 21 is welded to the tab welding sub-region 311, so that the edge portion of the tab 22 away from the main body part 21 is fixed, thereby reducing the risk of the edge portion of the tab 22 lifting and being damaged, and also being conducive to improving the reliability of the welding connection.

In other embodiments of the present application, referring to FIG. 9, an avoidance through-hole 223 is provided at a position of the tab 22 corresponding to the terminal welding region 32 to avoid the terminal welding region 32.

The avoidance through-hole 223 may refer to a through hole that passes through the tab 22. The avoidance through-hole 223 is provided opposite to the terminal welding region 32, so that the terminal welding region 32 and the tab 22 are staggered. The avoidance through-hole 223 may be in various shapes, including circular, polygonal, elliptical shapes and so on.

For example, as shown in FIG. 6, the upper and lower tabs 22 are each provided with an avoidance through-hole 223. The two avoidance through-holes 223 are respectively arranged opposite to middle portions of the two tab welding regions 31 arranged vertically, so that the tabs 22 can avoid the terminal welding region 32. During welding, upper and lower sides of the adapter 30 are ultrasonically welded to the two tabs 22 respectively, thereby welding the tabs 22 onto the adapter 30. Then, laser welding is performed in the region of the avoidance through-hole 223, thereby welding the adapter 30 and the electrode terminal 40 together.

For example, as shown in FIG. 8, an avoidance through-hole 223 is provided in a middle portion of a lapping region. The avoidance through-hole 223 is arranged opposite to a hollow hole enclosed by the quadrilateral tab welding region 31, so that the tab 22 can avoid the terminal welding region 32. By using the design that the terminal welding region 32 is located within the tab welding region 31, during welding, the avoidance through-holes 223 of the two tabs 22 are overlapped, and then, ultrasonic welding is performed around the overlapped avoidance through-holes 223 to weld the lapping region onto the adapter 30. Then, laser welding is performed in the region of the avoidance through-holes 223, thereby welding the adapter 30 and the electrode terminal 40 together.

For example, as shown in FIG. 9, an avoidance through-hole 223 is provided in the middle portion of the lapping region. The avoidance through-hole 223 is located between the tab welding sub-regions 311 arranged vertically, so that the tab 22 can avoid the terminal welding region 32. During welding, the avoidance through-holes 223 of the two tabs 22 are overlapped. Then, ultrasonic welding is performed on opposite sides of the avoidance through-holes 223 to weld the lapping region onto the adapter 30. Next, laser welding is performed in the region of the avoidance through-holes 223, thereby welding the adapter 30 and the electrode terminal 40 together. This welding method can employ two ultrasonic welding processes, requiring fewer welding steps, which helps improve the production efficiency of the battery cell 100.

By adopting the technical solution of this embodiment, the avoidance through-hole 223 is provided so that the tab 22 avoids the terminal welding region 32, thereby reducing the damage to the tab 22 caused by welding the electrode terminal 40 to the adapter 30, which is conducive to improving the welding quality and improving the connection reliability of the adapter 30, the tabs 22, and the electrode terminals 40.

In particular, when the electrode terminal 40 and the adapter 30 are laser-welded, direct laser irradiation on the tab 22 will cause damage to the tab 22; while the avoidance through-hole 223 allows the laser to pass through, thereby irradiating the tab 22 and reducing the risk of damage to the tab 22.

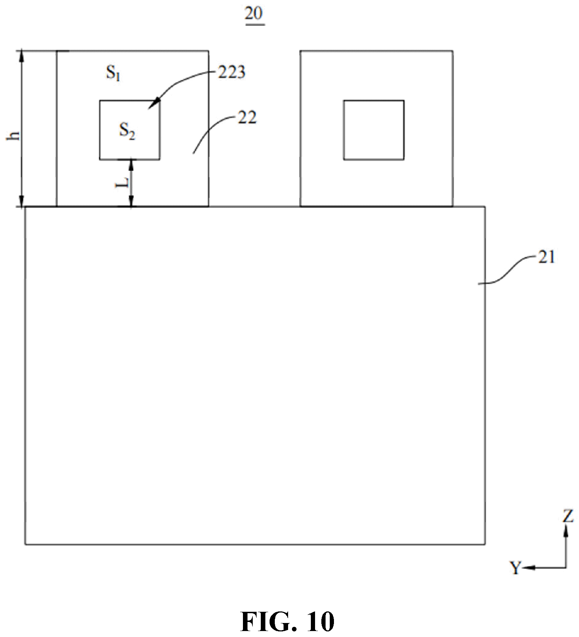

Referring to FIG. 10 together, FIG. 10 is a schematic structural diagram of an electrode assembly 20 according to some embodiments of the present application before tabs 22 thereof are bent.

In other embodiments of the present application, referring to FIG. 10, an area of the tab 22 is S₁, and a cross-sectional area of the avoidance through-hole 223 is S₂, where 0.05 ≤ S₂/S₁ ≤ 0.25.

The area S₁ of the tab 22 may refer to an area of a side surface of the tab 22 in a thickness direction.

For example, an area of a side surface of the tab 22 near an outer side of the electrode assembly 20 may be referred to as the area S₁ of the tab 22, that is, an area of a side surface of the tab 22 in a thickness direction of the electrode assembly 20 may also be referred to as the area S₁ of the tab 22.

The cross-sectional area S₂ of the avoidance through-hole 223 may refer to an area of a pattern formed by a plane perpendicular to an axis of the avoidance through-hole 223.

For example, an area of an opening formed in a surface of the tab 22 by the avoidance through-hole 223 may be referred to as the cross-sectional area S₂ of the avoidance through-hole 223.

0.05 ≤ S₂/S₁ ≤ 0.25, that is, 0.05 ≤ S₂/S₁ ≤ 0.25. It is understandable that S₂ ≥ 0.05S₁, the avoidance through-hole 223 has a certain area, which allows a welding head for welding the electrode terminal 40 and the adapter 30 to pass through, so as to reduce the damage to the tab 22 in the welding process of the electrode terminal 40 and the adapter 30; and S₂ ≤ 0.25S₁, so that the tab 22 has a certain area to be welded to the adapter 30, thereby improving the reliability of the welding.

By adopting the technical solution of this embodiment, the design of 0.05 ≤ S₂/S₁ ≤ 0.25 can simultaneously ensure the welding reliability of the tab 22 and the adapter 30, and reduce the damage to the tab 22 in the welding process of the electrode terminal 40 and the adapter 30, so that the tab 22, the adapter 30, and the electrode terminal 40 can be stably connected together.

In other embodiments of the present application, referring to FIG. 10, 0.1 ≤ S₂/S₁ ≤ 0.2.

0.1S₁ ≤ S₂ ≤ 0.2S₁, that is, 0.1 ≤ S₂/S₁ ≤ 0.2. It is understandable that S₂ ≥ 0.1S₁, the avoidance through-hole 223 has a large area, which better allows a welding head for welding the electrode terminal 40 and the adapter 30 to pass through, so as to better reduce the damage to the tab 22 in the welding process of the electrode terminal 40 and the adapter 30; and S₂ ≤ 0.2S₁, so that the tab 22 has a larger area to be welded to the adapter 30, thereby improving the reliability of the welding.

By adopting the technical solution of this embodiment, the design of 0.05S₁ ≤ S₂ ≤ 0.2S₁ can simultaneously better ensure the welding reliability of the tab 22 and the adapter 30, and reduce the damage to the tab 22 in the welding process of the electrode terminal 40 and the adapter 30, so that the tab 22, the adapter 30, and the electrode terminal 40 can be more stably connected together.

In some embodiments, a value of S₂/S₁ may be 0.05, 0.25, and any number between 0.05 and 0.25. For example, the value of S₂/S₁ may be, but is not limited to, 0.05, 0.06, 0.07, 0.09, 0.1, 0.1, 0.11, 0.12, 0.13, 0.14, 0.15, 0.16, 0.17, 0.18, 0.19, 0.2, 0.21, 0.22, 0.23, 0.24, and 0.25.

In other embodiments of the present application, referring to FIG. 10, a cross-sectional area of the avoidance through-hole 223 is S₂, where 25 mm² ≤ S₂ ≤ 125 mm².

25 mm² ≤ S₂ ≤ 125 mm², and it is understandable that S₂ ≥ 25 mm², the avoidance through-hole 223 has a certain area, which allows a welding head for welding the electrode terminal 40 and the adapter 30 to pass through, so as to reduce the damage to the tab 22 in the welding process of the electrode terminal 40 and the adapter 30; and S₂ ≤ 125 mm², so that the tab 22 has a certain area to be welded to the adapter 30, thereby improving the reliability of the welding.

By adopting the technical solution of this embodiment, the design of 25 mm² ≤ S₂ ≤ 125 mm² can simultaneously ensure the welding reliability of the tab 22 and the adapter 30, and reduce the damage to the tab 22 in the welding process of the electrode terminal 40 and the adapter 30, so that the tab 22, the adapter 30, and the electrode terminal 40 can be stably connected together.

In other embodiments of the present application, referring to FIG. 10, 35 mm² ≤ S₂ ≤ 65 mm².

35 mm² ≤ S₂ ≤ 65mm², and it is understandable that S₂ ≥ 35 mm², the avoidance through-hole 223 has a larger area, which better allows a welding head for welding the electrode terminal 40 and the adapter 30 to pass through, so as to reduce the damage to the tab 22 in the welding process of the electrode terminal 40 and the adapter 30; and S₂ ≤ 65 mm², so that the tab 22 has a larger area to be welded to the adapter 30, thereby improving the reliability of the welding.

By adopting the technical solution of this embodiment, the design of 35 mm² ≤ S₂ ≤ 65 mm² can simultaneously better ensure the welding reliability of the tab 22 and the adapter 30, and reduce the damage to the tab 22 in the welding process of the electrode terminal 40 and the adapter 30, so that the tab 22, the adapter 30, and the electrode terminal 40 can be more stably connected together.

In some embodiments, a value of S₂ may be 25 mm², 125 mm², and any number between 25 mm² and 125 mm². For example, the value of S₂ may be, but is not limited to, 25 mm², 30 mm², 35 mm², 40 mm², 45 mm², 50 mm², 55 mm², 60 mm², 65 mm², 70 mm², 75 mm², 80 mm², 85 mm², 90 mm², 95 mm², 100 mm², 105 mm², 110 mm², 115 mm², 120 mm², and 125 mm².

In other embodiments of the present application, referring to FIG. 10, a distance between the avoidance through-hole 223 and the main body part 21 is L, and a distance between an edge of the tab 22 away from the main body part 21 and the main body part 21 is h, where 5 mm ≤ L < h.

The distance L between the avoidance through-hole 223 and the main body part 21 may refer to a distance between an end face of the main body part 21 and the edge of the avoidance through-hole 223 close to the main body.

The distance h between the edge of the tab 22 away from the main body part 21 and the main body part 21 may refer to a protrusion height of the tab 22 protruding from the current collector.

5 mm ≤ L < h, and it is understandable that L ≥ 5 mm, there is a certain distance between an avoidance channel and the main body part 21, which provides certain space for the subsequent bending of the tab 22 and facilitates the opposing arrangement of the avoidance through-hole 223 and the terminal welding region 32, so as to reduce damage to the tab 22. At the same time, it also prevents the avoidance through-hole 223 from being arranged on the main body part 21, thereby improving the charging and discharging performance of the battery cell 100. L < h, so that the avoidance through-hole 223 is located on the tab 22 to achieve avoidance.

By adopting the technical solution of this embodiment, the design of 5 mm ≤ L < h allows the avoidance through-hole 223 to be a certain distance from the main body part 21, so as to facilitate the bending of the tab 22 and the opposing arrangement of the avoidance through-hole 223 and the terminal welding region 32, thereby reducing the damage to the tab 22.

In other embodiments of the present application, referring to FIG. 10, 8 mm ≤ L ≤ 15 mm.

8 mm ≤ L < 15 mm, and it is understandable that, L ≥ 8 mm allows for a larger distance between the avoidance channel and the main body part 21, which can better reserve certain space for the subsequent bending of the tab 22 and facilitate the opposing arrangement of the avoidance through-hole 223 and the terminal welding region 32, thereby reducing damage to the tab 22; L < 15 mm also allows for a certain distance between the avoidance through-hole 223 and the edge of the tab 22 away from the main body part 21, which facilitates increasing the welding area between the tab 22 and the adapter 30, and also helps improve the structural strength of the tab 22 and the reliability of the welding between the tab 22 and the adapter 30.

By adopting the technical solution of this embodiment, the design of 8 mm ≤ L < 15 mm can better balance the welding of the tab 22 and the adapter 30, as well as the welding of the electrode terminal 40 and the adapter 30, which is conducive to improving the connection reliability between the tab 22, the adapter 30, and the electrode terminal 40.

In some embodiments, a value of L may be 5 mm, h, and any number between 5 mm and h. For example, the value of H may be, but is not limited to, 5 mm, 6 mm, 7 mm, 8 mm, 9 mm, 10 mm, 11 mm, 12 mm, 13 mm, 14 mm, 15 mm, 16 mm, 17 mm.

The present application is further described below with reference to some embodiments.

### Embodiment 1

In this embodiment, referring to FIG. 5, FIG. 6, and FIG. 10, a battery cell 100 includes a shell 10, an electrode assembly 20, and an adapter 30. The shell 10 is provided with electrode terminals 40 configured to output or input electrical energy. The electrode assembly 20 is located inside the shell 10, and the electrode assembly 20 includes a main body part 21 and tabs 22 connected to end portions of the main body part 21. The adapter 30 is located inside the shell 10, the adapter 30 is provided with a tab welding region 31 configured to be welded to the tabs 22, and the adapter 30 is further provided with a terminal welding region 32 configured to be welded to the electrode terminals 40. The tab welding region 31 includes at least two tab welding sub-regions 311, and the terminal welding region 32 is located between the two tab welding sub-regions 311.

In this embodiment, the shell 10 includes a case 12 and an end cover 11. The end cover 11 covers an opening of the case 12, and the electrode terminal 40 is arranged on the end cover 11.

In this embodiment, the tab welding region 31 is ultrasonically welded to the tab 22; and the terminal welding region 32 is laser-welded to the electrode terminal 40.

In this embodiment, the terminal welding region 32 is spaced apart from the adjacent tab welding sub-region 311.

In this embodiment, a distance between the terminal welding region 32 and the adjacent tab welding sub-region 311 is H, where 0 mm ≤ H ≤ 10 mm.

In this embodiment, 5 mm ≤ H ≤ 8 mm.

In this embodiment, the plurality of tab welding sub-regions 311 are arranged at intervals in a first direction. The first direction is a length direction of the electrode assembly 20.

In this embodiment, the adapter 30 is welded to a plurality of tabs 22 of the same polarity, there are a plurality of tab welding regions 31, and the plurality of tabs 22 of the same polarity are configured to be welded to the plurality of tab welding regions 31 in a one-to-one correspondence.

In this embodiment, when the plurality of tabs 22 of the same polarity are welded to the plurality of tab welding regions 31 in a one-to-one correspondence, at least one of the tabs 22 covers at least part of the corresponding tab welding region 31.

In this embodiment, an avoidance through-hole 223 is provided at a position of the tab 22 corresponding to the terminal welding region 32 to avoid the terminal welding region 32.

In this embodiment, an area of the tab 22 is S₁, and a cross-sectional area of the avoidance through-hole 223 is S₂, where 0.05 ≤ S₂/S₁ ≤ 0.25.

In this embodiment, 0.1 ≤ S₂/S₁ ≤ 0.2.

In this embodiment, the cross-sectional area of the avoidance through-hole 223 is S₂, where 25 mm2 ≤ S₂ ≤ 125 mm2.

In this embodiment, 35 mm2 ≤ S₂ ≤ 65 mm2.

In this embodiment, a distance between the avoidance through-hole 223 and the main body part 21 is L, and a distance between an edge of the tab 22 away from the main body part 21 and the main body part 21 is h, where 5 mm ≤ L < h.

In this embodiment, 8 mm ≤ L ≤ 15 mm.

### Embodiment 2

A difference of this embodiment from Embodiment 1 lies in that: referring to FIG. 7, the adapter 30 is welded to a plurality of tabs 22 of the same polarity, and the plurality of tabs 22 of the same polarity are configured to be welded to a plurality of tab welding sub-regions 311 in a one-to-one correspondence.

In this embodiment, the plurality of tab welding sub-regions 311 are arranged at intervals in a first direction. The first direction is a width direction of the electrode assembly 20.

In this embodiment, when the plurality of tabs 22 of the same polarity are welded to the plurality of tab welding sub-regions 311 in a one-to-one correspondence, at least one of the tabs 22 covers at least part of the corresponding tab welding sub-region 311.

In this embodiment, the adapter 30 is welded to the plurality of tabs 22 of the same polarity, the plurality of tabs 22 of the same polarity are spaced apart, and an avoidance gap 221 is formed between two adjacent tabs 22. The avoidance gap 221 is provided opposite to the terminal welding region 32.

### Embodiment 3

A difference of this embodiment from Embodiment 2 lies in that: referring to FIG. 8, the adapter 30 is welded to a plurality of tabs 22 of the same polarity, the plurality of tabs 22 of the same polarity overlap to form an overlapping portion 222, and the overlapping portion 222 is configured to be welded to the tab welding region 31.

In this embodiment, the plurality of tab welding sub-regions 311 are annularly arranged in a circumferential direction of the terminal welding region 32.

In this embodiment, two adjacent tab welding sub-regions 311 are connected.

### Embodiment 4

A difference of this embodiment from Embodiment 3 lies in that: referring to FIG. 8, the plurality of tab welding sub-regions 311 are arranged at intervals in a first direction.

In this embodiment, an edge portion of the tab 22 away from the main body part 21 is configured to be welded to the tab welding sub-region 311.

In other embodiments of the present application, a battery 1100 is provided, including the battery cell 100 described in the above embodiments.

In other embodiments of the present application, an electrical apparatus is provided, including the battery 1100 described in the above embodiment.

The above description of various embodiments tends to emphasize the differences between each embodiment, and their similarities or common features can be cross-referenced. For the sake of brevity, they will not be repeated here.

Finally, it should be noted that: the above embodiments are merely used to illustrate the technical solutions of the present application, instead of imposing any limitation on the present application. Although the present application has been described in detail with reference to the above embodiments, those with ordinary skills in the art should understand that: the technical solutions disclosed in the above embodiments may still be modified, or a part or all of the technical features thereof may be replaced equivalently. These modifications and replacements are not intended to make the essence of corresponding technical solutions depart from the scope of the technical solutions of the embodiments of the present application, and should be encompassed within the scope of the claims and specification of the present application. In particular, the technical features mentioned in the various embodiments can be combined in any manner provided that there is no structural conflict. The present application is not limited to the particular embodiments disclosed herein, but rather includes all technical solutions falling within the scope of the claims.

## Claims

1. A battery cell, comprising:
a shell provided with electrode terminals configured to output or input electrical energy;
an electrode assembly located inside the shell, wherein the electrode assembly comprises a main body part and tabs connected to end portions of the main body part; and
an adapter located inside the shell, wherein the adapter is provided with a tab welding region configured to be welded to the tabs, and the adapter is further provided with a terminal welding region configured to be welded to the electrode terminals; and
the tab welding region comprises at least two tab welding sub-regions, and the terminal welding region is located between the two tab welding sub-regions.

2. The battery cell according to claim 1, wherein the terminal welding region is spaced apart from the adjacent tab welding sub-region.

3. The battery cell according to claim 1 or 2, wherein a distance between the terminal welding region and the adjacent tab welding sub-region is H, wherein 0 mm ≤ H ≤ 10 mm.

4. The battery cell according to claim 3, wherein 5 mm ≤ H ≤ 8 mm.

5. The battery cell according to any one of claims 1 to 4, wherein the plurality of tab welding sub-regions are arranged at intervals in a first direction.

6. The battery cell according to any one of claims 1 to 4, wherein the plurality of tab welding sub-regions are annularly arranged in a circumferential direction of the terminal welding region.

7. The battery cell according to claim 5, wherein two adjacent tab welding sub-regions are arranged at an interval; or, two adjacent tab welding sub-regions are connected to each other.

8. The battery cell according to any one of claims 1 to 6, wherein the adapter is welded to a plurality of tabs of the same polarity, and the plurality of tabs of the same polarity are configured to be welded to the plurality of tab welding sub-regions in a one-to-one correspondence;
or, the adapter is welded to a plurality of tabs of the same polarity, there are a plurality of tab welding regions, and the plurality of tabs of the same polarity are configured to be welded to the plurality of tab welding regions in a one-to-one correspondence.

9. The battery cell according to claim 8, wherein when the plurality of tabs of the same polarity are welded to the plurality of tab welding sub-regions in a one-to-one correspondence, at least one of the tabs covers at least part of the corresponding tab welding sub-region; and
when the plurality of tabs of the same polarity are welded to the plurality of tab welding regions in a one-to-one correspondence, at least one of the tabs covers at least part of the corresponding tab welding region.

10. The battery cell according to any one of claims 1 to 9, wherein the adapter is welded to a plurality of tabs of the same polarity, the plurality of tabs of the same polarity are spaced apart, and an avoidance gap is formed between two adjacent tabs, wherein the avoidance gap is provided opposite to the terminal welding region.

11. The battery cell according to any one of claims 1 to 9, wherein the adapter is welded to a plurality of tabs of the same polarity, the plurality of tabs of the same polarity overlap to form an overlapping portion, and the overlapping portion is configured to be welded to the tab welding region.

12. The battery cell according to claim 11, wherein an edge portion of the tab away from the main body part is configured to be welded to the tab welding sub-region.

13. The battery cell according to any one of claims 1 to 9, 11, and 12, wherein an avoidance through-hole is provided at a position of the tab corresponding to the terminal welding region to avoid the terminal welding region.

14. The battery cell according to claim 13, wherein an area of the tab is S₁, and a cross-sectional area of the avoidance through-hole is S₂, wherein 0.05 ≤ S₂/S₁ ≤ 0.25.

15. The battery cell according to claim 14, wherein 0.1 ≤ S₂/S₁ ≤ 0.2.

16. The battery cell according to any one of claims 13 to 15, wherein the cross-sectional area of the avoidance through-hole is S₂, wherein 25 mm² ≤ S₂ ≤ 125 mm².

17. The battery cell according to claim 16, wherein 35 mm² ≤ S₂ ≤ 65 mm².

18. The battery cell according to any one of claims 13 to 17, wherein a distance between the avoidance through-hole and the main body part is L, and a distance between an edge of the tab away from the main body part and the main body part is h, wherein 5 mm ≤ L < h.

19. The battery cell according to claim 18, wherein 8 mm ≤ L ≤ 15 mm.

20. The battery cell according to any one of claims 1 to 19, wherein the tab welding region is ultrasonically welded to the tab; and/or, the terminal welding region is laser-welded to the electrode terminal.

21. A battery, comprising the battery cell according to any one of claims 1 to 20.

22. An electrical apparatus, comprising the battery according to claim 21.
